# EUROPÄISCHE PATENTSCHRIFT

(11) **EP 2 941 515 B1**
(45) Veröffentlichungstag und Bekanntmachung des Hinweises auf die Patenterteilung: **17.04.2019**
(21) Anmeldenummer: 14700039.2
(22) Anmeldetag: 02.01.2014
(51) Int. Cl.: E04F 13/14

(54) **FASSADENBEKLEIDUNGSELEMENT MIT TEXTILBEWEHRUNG UND HALTERN UND VERFAHREN ZU DESSEN ERZEUGUNG**
FACADE CLADDING ELEMENT HAVING TEXTILE REINFORCEMENT AND RETAINERS AND METHOD FOR GENERATING SAME
ÉLÉMENT D'HABILLAGE DE FACADE EN BÉTON POURVU D'UNE ARMATURE TEXTILE ET D'ÉLÉMENTS DE RETENUE ET PROCÉDÉ POUR LE PRODUIRE

(30) Priorität: 04.01.2013 DE 102013100053
(43) Veröffentlichungstag der Anmeldung: 11.11.2015
(73) Patentinhaber: Solidian GmbH, 72458 Albstadt (DE)
(72) Erfinder: KARLE, Roland, 72406 Bisingen (DE); PFAFF, Johann, 72474 Winterlingen (DE); KROMER, Hans, 72474 Winterlingen (DE)
(74) Vertreter: Rüger Abel
(86) Internationale Anmeldenummer: PCT/EP2014/050003
(87) Internationale Veröffentlichungsnummer: WO 2014/106625

(56) Entgegenhaltungen:
- EP-A1- 0 113 290
- WO-A1-2013/102593
- DE-A1- 1 759 606
- FR-A- 317 753
- FR-A- 342 879
- FR-A1- 2 207 233
- FR-A1- 2 627 213

## Beschreibung

Die Erfindung betrifft ein Fassadenbekleidungselement, sowie ein Fertigungsverfahren für ein Fassadenbekleidungselement.

Betonfertigelemente weisen einen Betonkörper auf, in den eine lineare, flächige oder räumliche Bewehrung aus Stäben, Matten oder Körben eingebettet ist. Es ist bekannt, zu Befestigungszwecken und/oder zu Transportzwecken Halter vorzusehen, die aus dem Betonkörper herausragen oder in diesen integriert sind und die mit der Bewehrung verbunden sind.

Beispielsweise offenbart dazu die DD 128693 Betonelemente mit einer Bewehrung aus Stahlbügeln, wobei die Stahlbügel mit zusätzlichen Stahlprofilen verbunden sind, die Verankerungspunkte für Befestigungsbolzen bilden. Solche Befestigungsbolzen werden durch Öffnungen in das Betonfertigteil eingefügt und mit den Stahlelementen verhakt.

Aus der FR 2 627 213 A1 sind Betonplatten bekannt, die eine Bewehrung aus Glasfasern, Kunststoff- oder Metalldrähten aufweisen. Außerdem sind in die Betonplatten Befestigungsarmaturen eingelassen, die mit der Bewehrung durch Umwicklung verbunden sind.

Weiter offenbart die DE 36 08 953 Fassadenplatten mit einer Bewehrung, die einen Betonstahlstab umgreift. Dieser Betonstahlstab durchquert einen Ausschnitt der Fassadenplatte und kann somit als Befestigungspunkt dienen.

Die DE 102 60 684 A1 befasst sich mit dünnen Fassadenelementen und deren Befestigung an einem Tragsystem vor der Wärmedämmung einer Hauswand. Die plattenförmigen Fassadenelemente bestehen aus Beton und weisen eine Bewehrungseinlage aus einem Glasfasergewebe oder einem Glasfasergelege auf. In das Fassadenelement sind Halteelemente einlaminiert. Als Halteelemente dienen Gewindehülsen mit einem Verankerungsteller, der in das Fassadenelement einlaminiert ist. Alternativ werden Halteelemente aus einem Flachmaterial aus Metall vorgeschlagen. Dieses ist derart abgewinkelt, dass es zwei voneinander fort weisende Laschen aufweist. Diese werden in das Fassadenelement einlaminiert.

Fassadenelemente sollen häufig möglichst dünn ausgebildet werden, um das Fassadengewicht zu reduzieren und die Montage zu erleichtern. Andererseits sollen Fassadenplatten häufig in relativ großen Abmessungen als rechteckige Platten bereitgestellt werden, wobei eine Kantenlänge von bis zu 2 m oder auch darüber gefordert wird. Für Aufhängeelemente von Fassadenplatten bedeutet dies, dass trotz der geringen Plattenstärke hohe Gewichtskräfte aufzunehmen sind, wobei infolge der Plattengröße auch noch erhebliche Windlasten hinzukommen, die ohne Beschädigung oder Ermüdung der Platten auf das Befestigungssystem zu übertragen sind. Aufgrund der angestrebten geringen Dicke der Platten kann sich dies als schwierig erweisen.

Es ist eine Aufgabe der Erfindung, ein Fassadenbekleidungselement anzugeben, das mindestens eines der oben genannten Probleme löst. Außerdem ist es eine Aufgabe der Erfindung, ein praktisches Fertigungsverfahren für ein Fassadenbekleidungselement anzugeben.

Das erfindungsgemäße Fassadenbekleidungselement weist einen Grundkörper aus einem Beton auf, der mit zumindest einer Lage aus einer textilen Bewehrung versehen ist. Bei dem Beton handelt es sich um ein Material, bei dem Partikel unterschiedlicher Größe durch ein abbindendes Material zusammengehalten sind. Beispielsweise können die Partikel mineralische Partikel sein, die durch Zementleim zusammengehalten sind (sogenannter Mineralbeton). Anstelle des Zementleims kann jedoch auch ein organisches bindendes Material, wie beispielsweise ein Kunstharz, vorgesehen sein (sogenannter Polymerbeton). Die gebundenen Partikel können Sand, Gesteinsmehl, Glas oder dergleichen sein. Außerdem können die gebundenen Partikel auch nichtmineralische Natur sein und beispielsweise Holzmehl oder andere Materialien umfassen (Holzbeton, Faserzement und dergleichen).

Der Beton bildet einen Grundkörper, in den zumindest eine Lage einer textilen Bewehrung eingebettet ist. Die textile Bewehrung besteht aus einem Fasermaterial, vorzugsweise mit geordneten Faserverläufen. Die Fasern sind vorzugsweise zu Fäden, Strängen, Rovings, oder dergleichen zusammengefasst. Es kann sich bei dem Fasermaterial um Naturfasern, Kunstfasern, Mineralfasern, Glasfasern, Kohlenstofffasern und/oder Metallfasern oder ein Gemisch aus einem oder mehreren der genanten Materialien handeln.

Vorzugsweise ist das Bewehrungsmaterial ein Gelege, ein Gewebe, ein Netz oder auch eine Maschenware. Das Gewebe, Gelege oder Netz kann eine gitterartige Struktur bilden. Auch andere Textilstrukturen, in denen Fasern, Fäden oder Rovings in wenigstens zwei verschiedenen Richtungen geordnet angeordnet sind, können Anwendung finden. Die Fasern, Fäden oder Rovings der Gelege oder sonstiger Anordnungen können insbesondere an Kreuzungspunkten miteinander verklebt, durch Bindefäden vernäht oder zusammengebunden oder verschweißt sein.

Erfindungsgemäß sind ein oder mehrere Befestigungselemente vorgesehen, die mit dem textilen Bewehrungsmaterial unmittelbar stoffschlüssig verbunden sind. Es besteht somit unabhängig von der Einbettung der Befestigungselemente in den Beton eine stoffschlüssige Verbindung zwischen dem Befestigungselement und der Bewehrung.

Diese stoffschlüssige Verbindung wird durch einen Verbindungsstoff vermittelt der von dem Bindemittel des Betons verschieden ist. Es kann sich bei diesem Verbindungsstoff um einen Klebstoff, insbesondere einen organischen Klebstoff handeln. Der organische Klebstoff kann zwischen einen Abschnitt des Befestigungselements und die Bewehrung eingebracht werden und auf geeignete Weise aushärten. Es kann sich um Klebstoffe handeln, die durch Verdunstung von Lösungsmitteln aushärten. Es kann sich auch um Klebstoffe handeln, die durch chemische Reaktion insbesondere Vernetzung aushärten. Darüberhinaus kann es sich um Schmelzklebstoffe handeln, die durch Abkühlung aushärten. Wenn die textile Bewehrung mit einer Kunststoffbeschichtung versehen ist, kann auch diese Kunststoffbeschichtung zur Erzeugung der stoffschlüssigen Verbindung zu den Befestigungselementen dienen. Beispielsweise kann eine Kunststoffbeschichtung vorgesehen sein, die sich wie ein Schmelzklebstoff thermisch aufschmelzen und so mit dem Befestigungselemente verbinden lässt. Alternativ kann ein organischer Klebstoff ausgewählt werden, der einerseits eine gute Verbindung zu der Kunststoffbeschichtung und andererseits eine gute Verbindung zu dem Befestigungselement herstellt.

Als Klebstoff eignen sich insbesondere Epoxydharze, Polyurethane oder dergleichen. Die Klebeverbindung kann aus einem Klebefilm bestehen, der auf das Befestigungselement aufgebracht ist.

Im Falle einer Klemmverbindung kann die Bewehrung in Gestalt einer Matte zwischen zwei oder mehrere Schenkel des Befestigungselements gelegt und durch plastische Verformung der Schenkel oder Einsetzen eines Klemmstifts festgeklemmt werden.

Mit dem erfindungsgemäßen Konzept gelingt es, Betonfertigelemente in Gestalt dünner Platten herzustellen, bei denen die Sichtfläche, d.h. eine Flachseite, frei von Durchbrüchen und sichtbaren Abdrücken ist. Auch später zur Befestigung solcher Platten an einem Trägersystem müssen weder Durchbrüche noch sichtbare Befestigungselemente vorgesehen werden.

Das Befestigungselement kann aus Metall oder auch einem Kunststoff, insbesondere einem Kunststoffverbundmaterial bestehen. Das Kunststoffverbundmaterial kann eine Kunststoffmatrix aufweisen, in die Fasermaterialien eingelagert sind. Das Verbundmaterial kann in seiner Wärmeausdehnung auf das Betonfertigelement abgestimmt sein. Es kann sich um ein Spritzgussteil oder ein pultrodiertes Teil handeln. Es kann seinerseits mit Glasfasern oder Kohlenstofffasern bewehrt sein. Vorzugsweise können hier Kurzfasern zum Einsatz kommen. Außerdem kann das Befestigungselement längenverstellbar und/oder querverstellbar ausgebildet sein. Besteht das Befestigungselement aus Kunststoff, lässt es sich beispielsweise mit geeigneten Schweißverfahren, beispielsweise Ultraschallschweißen mit dem Bewehrungsmaterial, insbesondere dessen Kunststoffbeschichtung, verbinden. Auch andere Schweißverfahren oder der Einsatz zusätzlichen Klebstoffs sind möglich.

Besteht das Befestigungselement aus Metall, kann insbesondere Schmelzklebstoff zur Verbindung vorgesehen werden, wobei dieser beispielsweise auf einen vorgewärmten Abschnitt des Befestigungselements aufgebracht wird. Das so vorbereitete Befestigungselement kann dann auf eine Bewehrungslage aufgedrückt und abgekühlt werden, womit die Verbindung hergestellt ist.

Vorzugsweise wird zwischen dem Befestigungselement und der Bewehrung eine flächenhafte Verbindung, d.h. nicht lediglich eine Klebenaht, sondern eine Klebefläche ausgebildet. Mit den genannten Konzepten lässt sich eine großflächige Kraftübertragung zwischen dem Befestigungselement und der Bewehrung erreichen. Der Kraftfluss von der Bewehrung zu dem Befestigungselement geht somit nicht oder nur zu geringen Teilen über den Grundkörper, womit auch bei dünnwandigen Betonfertigteilen eine gute Haltbarkeit und hohe Belastbarkeit erreicht werden kann.

Dies gilt insbesondere, wenn das Befestigungselement einen flächenartigen, zum Beispiel als ebene Platte, ausgebildeten Verankerungsabschnitt aufweist, der die Bewehrung flächig hintergreift oder in eine Tasche der Bewehrung eingefügt ist. Die Tasche kann an einer Bewehrung oder zwischen zwei Bewehrungslagen ausgebildet sein. Sie kann z.B. durch den zwischen zwei Bewehrungslagen vorhandenen Zwischenraum gebildet sein. Die Tasche kann durch einen in einer der Bewehrungslagen vorhandenen Schlitz oder durch die Maschen einer der Besehrungslagen hindurch zugänglich sein. Eine Tasche kann auch lediglich im Bereich des Befestigungselements ausgebildet sein, indem die Bewehrung dort mit einem weiteren Textil gleicher oder anderer Bauart verbunden ist. Die Tasche ist dann zwischen der Bewehrung und dem weiteren Textil ausgebildet. Zur Zugänglichkeit der Tasche gelten die obigen Ausführungen entsprechen.

Das Befestigungselement kann sich durch einen in der Bewehrung ausgebildeten Schlitz erstrecken und mit seiner Platte das Bewehrungsmaterial hintergreifen. Ein Schlitz ist ein linien- oder streifenförmiger Bereich, in dem in einer Richtung verlaufende Stränge der Bewehrung unterbrochen sind, währen die quer dazu verlaufenden Stränge der Bewehrung nicht durchtrennt sind.

Das Befestigungselement kann sich auch durch Lücken des von den Strängen der Bewehrung gebildeten Gitters erstrecken. Dies gilt insbesondere für Bewehrungsgitter mit einer Maschenweite, die größer ist als die Breite der Platte. Ist die Maschenweite geringer als die Breiteeiner Platte, kann die Platte auch mit einem oder mehreren Schlitzen versehen sein, um in mehrere benachbarte Maschen zu greifen.

Es wird darauf hingewiesen, dass sich der Begriff "Masche" und davon abgeleitete Begriffe, wie "Maschenweite", "Gittermasche" oder dergleichen, auf Zwischenräume der Gewebe, Gelege, Netze, Gitteranordnungen oder sonstigen flächenhaften Textilgebilde bezieht. Er ist nicht auf Maschenware im Sinne von Gestricken oder Gewirken beschränkt.

Das erfindungsgemäße Betonfertigteil lässt sich rationell fertigen. Insbesondere zeigt sich, dass die Anordnung der Befestigungselemente auf der Bewehrung und die Verbindung der Befestigungselemente mit der Bewehrung vor dem Gießen des Betonteils eine große Arbeitserleichterung und einen Gewinn hinsichtlich der erzielbaren Genauigkeit mit sich bringen. Der Zuschnitt der Bewehrung und die Anordnung der Befestigungselemente auf dieser sowie die Herstellung der Verbindung kann maschinell erfolgen. Die mit der Bewehrung verbundenen Befestigungselemente können danach nach dem Herstellen des Betonkörpers zum Entnehmen desselben aus seiner Form genutzt werden, und zwar selbst dann, wenn der aus Beton bestehende Grundkörper noch nicht vollständig durchgehärtet ist, sondern lediglich eine ausreichende Anfangsfestigkeit aufweist.

Die Bewehrung ist ein flächenhaftes Textilgebilde mit mindestens einer Lage (Bewehrungslage). Es kann mehrere Lagen gleich oder unterschiedlich ausgebildeter Bewehrungsstrukturen aufweisen, die dann lose aufeinanderliegende, nur durch den Betonkörper untereinander verbundene oder auch untereinander unabhängig vom Betonkörper verbundene Bewehrungslagen bilden.

Das Befestigungselement kann nach dem Vergießen mit Beton abgeschnitten werden, so dass es lediglich als Abstandshalter beim Vergießen dient. Alternativ können unterschiedliche Befestigungselemente an der Bewehrung befestigt sein, von denen einige abgeschnitten werden und die anderen für den Anbau verbleiben.

Einzelheiten vorteilhafter Ausführungsformen der Erfindung ergeben sich aus der Zeichnung der Beschreibung oder Ansprüchen. Es zeigen:
Figur 1 ein Beton-Fertigteilelement, in einer perspektivischen vereinfachten Gesamtansicht.
Figur 2 einen ausschnittsweisen Querschnitt des Betonfertigelements nach Figur 1, in schematischer Darstellung.
Figur 3 eine abgewandelte Ausführungsform eines Betonfertigelements, in einer ausschnittsweisen Querschnittsdarstellung entsprechend Figur 2.
Figur 4 eine abgewandelte Ausführungsform eines Betonfertigelements, in einer ausschnittsweisen Querschnittsdarstellung entsprechend Figur 2.
Figur 5 eine Bewehrung mit einem darauf angeordneten Befestigungselement, in perspektivischer Darstellung.
Figur 6 eine abgewandelte Ausführungsform einer Bewehrung mit einem Befestigungselement, in perspektivischer Darstellung.
Figur 7 eine weiter abgewandelte Ausführungsform einer Bewehrung und eines Befestigungselements, in perspektivischer Darstellung.
Figur 8 die Bewehrung und das Befestigungselement nach Figur 7, in einer ausschnittsweisen Seitenansicht.
Figur 9 eine weiter abgewandelte Ausführungsform eines Betonfertigelements, in einer ausschnittsweisen Perspektivansicht seiner Bewehrung.
Figur 10 eine nicht beanspruchte abgewandelte Ausführungsform eines Betonfertigelements mit klemmender Befestigung der Bewehrung, in einer ausschnittsweisen Querschnittsdarstellung entsprechend Figur 2.
Figur 11 eine abgewandelte Ausführungsform eines Betonfertigelements als in die Bewehrung eingebettetes Stabelement, in einer ausschnittsweisen Querschnittsdarstellung entsprechend Figur 2.
Figur 12 eine Ausführungsform eines Betonfertigelements mit einem abgewandelten Befestigungselement in Anlehnung an die Ausführung nach Figur 1 bis 6, in einer ausschnittsweisen Querschnittsdarstellung entsprechend Figur 2.
Figur 13 eine abgewandelte Ausführungsform eines Betonfertigelements mit klemmender Befestigung der Bewehrung, in einer ausschnittsweisen Querschnittsdarstellung entsprechend Figur 2.
Figur 14 ein abgewandeltes Befestigungselement mit Durchbrüchen, in perspektivischer isolierter Darstellung.
Figur 15 ein abgewandeltes Befestigungselement mit räumlicher Struktur, in perspektivischer isolierter Darstellung.
Figur 16 ein weiter abgewandeltes Befestigungselement mit, in perspektivischer isolierter Darstellung.
Figur 17 eine abgewandelte Ausführungsform eines Betonfertigelements anhand seiner zweilagigen Bewehrung und eines zweietagigen Befestigungselement, in perspektivischer Darstellung.
Figur 18 eine Gießform mit eingelegter Bewehrung, in perspektivischer Darstellung zur Veranschaulichung der Herstellung des Betonfertigelements.

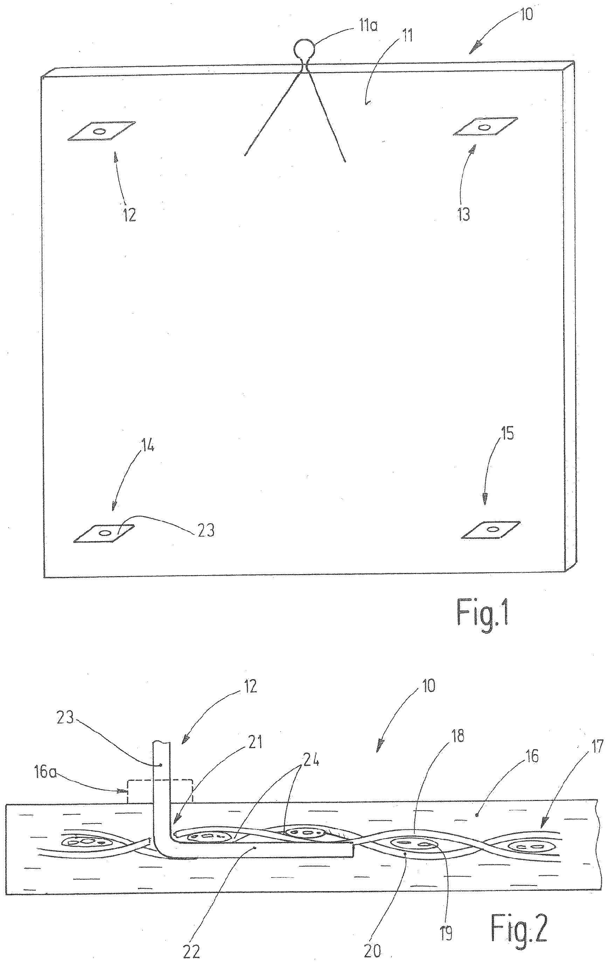

In Figur 1 ist ein Betonfertigelement 10 veranschaulicht, das als ebene dünne Platte ausgebildet ist. Dabei ist in Figur 1 die im Gebrauch an einer Fassade vom Betrachter abgewandte Befestigungsseite dargestellt, bei der aus der hinteren Flachseite 11 mehrere Befestigungselemente 12, 13, 14, 15 herausragen. Diese sind untereinander vorzugsweise gleich ausgebildet, so dass die nachfolgende Beschreibung des Befestigungselements 12 stellvertretend für alle anderen gilt. Zusätzlich zu den Befestigungselementen 12, 13, 14, 15 kann auf die Plattenrückseite eine Transportöse 11a aufgeklebt sein, die z.B. nach Montage des Betonfertigelements 10 abgeschnitten werden kann. Die Transportöse 11a kann aus Kunststoff, Kunststoffseil oder Metall gefertigt sein.

Das Betonfertigelement 10 weist gemäß Figur 2 einen Grundkörper 16 auf, der aus einem Beton besteht. Es kann sich dabei um Mineralbeton, Polymerbeton, Textilbeton oder dergleichen handeln. Bevorzugterweise handelt es sich um einen Mineralbeton, bestehend aus mineralischen Zuschlagstoffen und Zementleim. In diesen Grundkörper 16 ist eine Bewehrung 17 eingelagert. Diese ist vorzugsweise etwa mittig angeordnet. Sie besteht aus Fäden oder Strängen 18, 19, 20 oder Rovings eines Fasermaterials, wie beispielsweise Glasfasern, Kunststofffasern, Kohlenstofffasern oder dergleichen, die zu einem im Wesentlichen ebenen Gewebe oder Gelege verarbeitet sind. Für dieses wie auch für alle nachfolgend erläuterten Ausführungsbeispiele gilt, dass die Fäden oder Strängen 18, 19, 20 oder Rovings des Fasermaterials der Bewehrung 17 mit einem Kunststoff imprägniert sein können, wie z.B. mit einem Epoxydharz. Ersatzweise oder zusätzlich kann ein Klebstoff aufgebracht werden, z.B. ein Schmelzklebstoff. Dieser kann die Stränge 18, 19, 20 an Kreuzungspunkten untereinander verbinden, so dass die Bewehrung 17 ein relativ steifes und somit leicht handhabbares Gitter bildet.

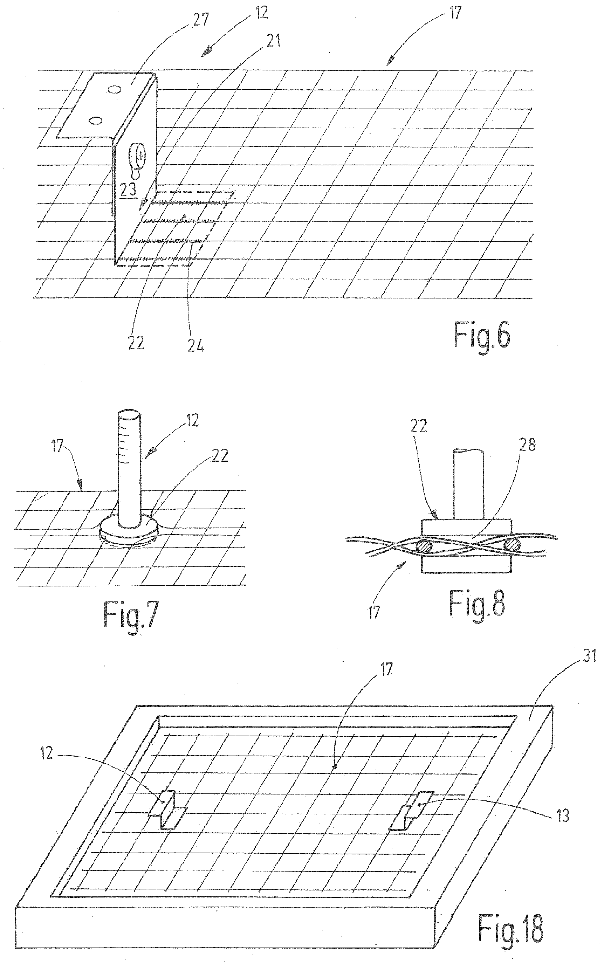

Figur 2 veranschaulicht ein Gewebe, bei dem die Faserstränge 18, 20 Kettfäden und die Faserstränge 19 Schussfäden bilden. Das Gewebe bildet eine Gitterstruktur, wie es insbesondere auch aus Figur 6 ersichtlich ist. Anstelle der gitterartigen Gewebestruktur kann jedoch auch ein Gelege mit sich z.B. rechtwinklig kreuzenden Fäden oder Rovings, ein Gewirk oder ein Gestrick Anwendung finden. Im Falle eines Rovings können die in Gitterstruktur angeordneten Fäden oder Rovings in zwei oder mehreren Ebenen angeordnet und an Kreuzungspunkte durch Kleben oder Schweißen miteinander verbunden sein.

Der Grundkörper 16 kann als ebene Platte ausgebildet sein. Optional kann an ihr in Umgebung des Befestigungselements 12 ein Kragen 16a ausgebildet sein, wie in Figur 2 gestrichelt dargestellt ist.

Bei dem Ausführungsbeispiel nach Figur 2 (und 6) ist in der Bewehrung 17 ein Schlitz 21 ausgebildet, durch den sich das Befestigungselement 12 erstreckt. Es weist einen Verankerungsabschnitt 22 auf, der hier als plattenförmiger, parallel zu der Bewehrung 17 angeordneter Fuß ausgebildet ist. Von diesem erstreckt sich rechtwinklig und durch den Schlitz 21 ein Verbindungsabschnitt 23, der aus dem Grundkörper 16 herausragt und somit wie Figur 1 zeigt, zur Verbindung des Betonfertigelements 10, beispielsweise mit einem Traggerüst dienen kann.

Bei der Ausführungsform des Betonfertigelements nach Figur 2 besteht eine flächenhafte unmittelbare Verbindung zwischen dem plattenförmigen Verankerungsabschnitt 22 und der von diesem hintergriffenen Bewehrung 17. Dazu ist eine stoffschlüssige Verbindung zwischen einem die Bewehrung 17 umhüllenden Kunststoffmaterial und dem Verankerungsabschnitt 22 gegeben. Wie es in Figur 2 angedeutet ist, sind die Stränge 18, 19, 20 mit einem Kunststoffmaterial beispielsweise einem Kunstharz getränkt und von diesem ummantelt. Durch Reaktivierung dieses Kunststoffs, beispielsweise durch Druck und Wärme, werden großflächige Verbindungszonen 24 zwischen dem Verankerungsabschnitt 22 und der Bewehrung 17 geschaffen.

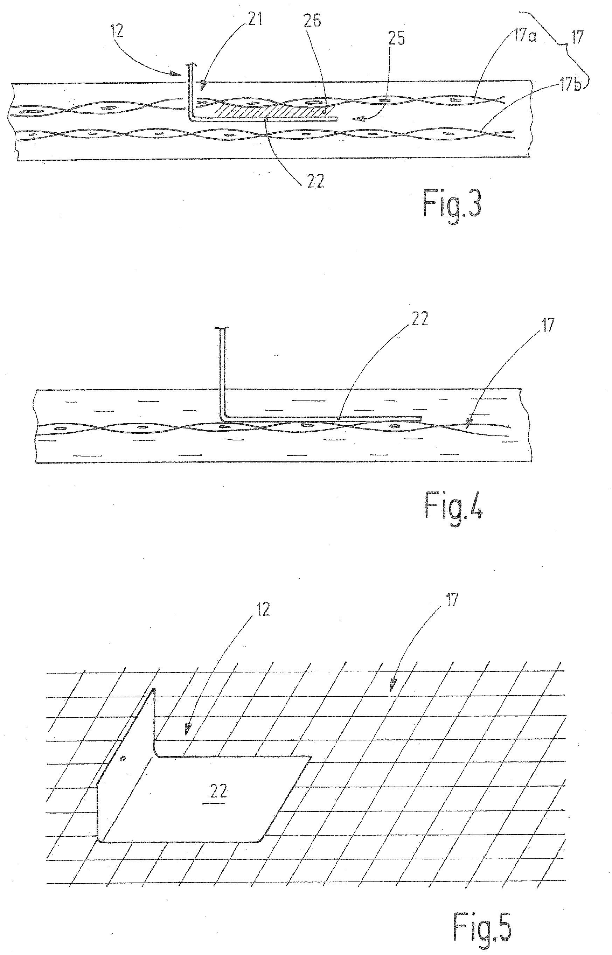

Während die Bewehrung 17 nach Figur 2 einlagig ausgebildet ist, kann sie gemäß Figur 3 auch zwei- oder mehrlagig ausgebildet sein. Eine obere Bewehrungslage 17a kann mit dem Schlitz 21 versehen sein. Eine untere Bewehrungslage 17b kann ungeschlitzt ausgebildet sein. Der Verankerungsabschnitt 22 erstreckt sich hier in dem Bereich einer zwischen den beiden Bewehrungslagen 17a, 17b ausgebildeten Tasche 25. Auf diese Weise ist schon eine formschlüssige Lagerung des Befestigungselements 12 an der Bewehrung 17 gegeben. Zusätzlich ist jedoch zu einer oder zu beiden Bewehrungslagen 17a und/oder 17b eine großflächige stoffschlüssige Verbindung, beispielsweise mittels Klebstoffs 26 vorgesehen. Anstelle des Klebstoffs 26 kann auch die Beschichtung mindestens einer der Bewehrungslagen 17a, 17b reaktiviert, zum Beispiel aufgeschmolzen werden, um eine flächige Verbindung zu dem Verankerungsabschnitt 22 herzustellen.

Wie Figur 4 und 5 zeigen, ist es auch möglich, den Verankerungsabschnitt 22 auf die Bewehrung 17 aufzukleben.

Der Verbindungsabschnitt 23 kann, wie es Figur 6 andeutet, längenverstellbar ausgebildet sein. Dazu kann der zum Beispiel plattenförmige Verbindungsabschnitt 23 mit einem weiteren Befestigungswinkel 27 verschraubt sein. Zur erleichterten lagerichtigen Positionierung des Befestigungswinkels 27 zu dem Verbindungsabschnitt 23 können diese an den einander zugewandten Flächen gezahnt und durch eine Befestigungsschraube zusammengehalten sein.

Das Befestigungselement 12 kann auch abweichend von einer Winkelkonfiguration zum Beispiel gemäß Figur 7 und 8 ausgebildet sein. Es weist dann als Verankerungsabschnitt 22 zum Beispiel einen rechteckigen, zylinderförmigen oder auch einen anderweitig ausgebildeten Kopf auf, der zum Beispiel in eine Gewebemasche oder anderweitige Öffnung der Bewehrung 17 eingepasst ist. Der Kopf 22 kann eine außen umlaufende Nut 28 aufweisen, in die sich das Material der Bewehrung 17 legt. Der Kopf 22 ist hier mit Klebstoff mit der Bewehrung 17 verbunden.

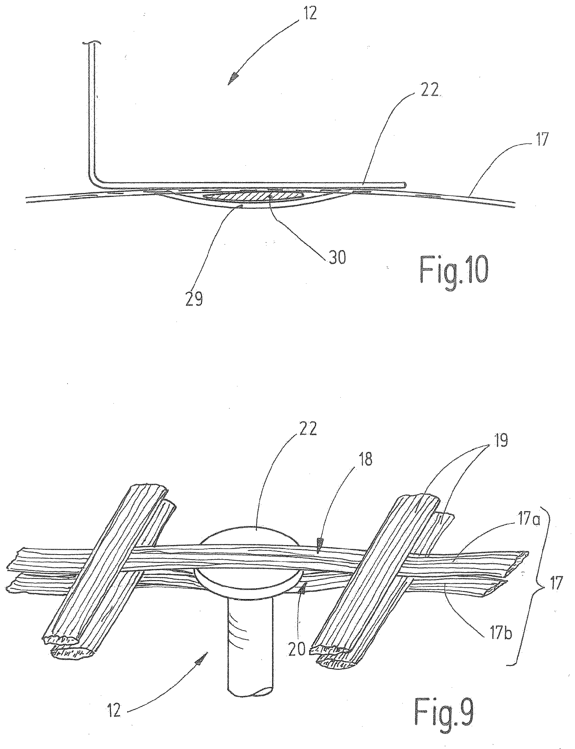

Eine prinzipiell ähnliche Ausführungsform der Bewehrung 17 und des Befestigungselements 12 ist in Figur 9 veranschaulicht. Das Befestigungselement 12 ist als Bolzen ausgebildet, der als Verankerungsabschnitt 22 einen Flachkopf aufweist. Die Bewehrung 17 ist zweilagig (17a, 17b) aus gitterförmig gelegten Fasersträngen ausgebildet, die an den Kreuzungspunkten miteinander verbunden, z.B. durch die Imprägnierungsmasse verklebt sind. Die querlaufenden Stränge 19 gehören zu den beiden Bewehrungslagen 17a, 17b. Die übereinander angeordneten längs laufenden Stränge 18, 20 gehören ebenfalls zu den unterschiedlichen Bewehrungslagen 17a, 17b. Während der Strang 18 den Kopf 22 diametral überquert, ist der Strang 20 aufgeweitet. Seine beiden Teilstränge laufen unterhalb des Kopfes (gegebenenfalls an diesem anliegend) an beiden Seiten des Schafts des bolzenartigen Befestigungselements 12 vorbei. Die Teilstränge nehmen den Schaft zwischen einander auf. Das Befestigungselement ist so formschlüssig in die Bewehrung 17 eingebunden. Zusätzlich ist es mit der Bewehrung 17 verklebt. Auch kann der Schaft eine Klemmscheibe tragen, die den unteren Strang 20 gegen den Kopf 22 festklemmt (nicht dargestellt).

Die Verbindung muss nicht zwingend stoffschlüssig sein. Wie Figur 10 veranschaulicht, kann es sich auch um eine Klemmverbindung handeln. Wiederum wird hier von einem winkelförmigen Befestigungselement 12 ausgegangen, dessen plattenförmiger Verankerungsabschnitt 22 einen streifenförmigen aus seiner Ebene herausgebogenen Abschnitt 29 aufweist. Dieser durchgreift eine Rechteckausnehmung der Bewehrung 17. Ein zwischen die Bewehrung 17 und den Abschnitt 29 quer zu diesem eingetriebener flach oder auch keilförmig ausgebildete Riegel 30 klemmt dann die Bewehrung gegen den Verankerungsabschnitt 22, um die Bewehrung 17 festzuklemmen.

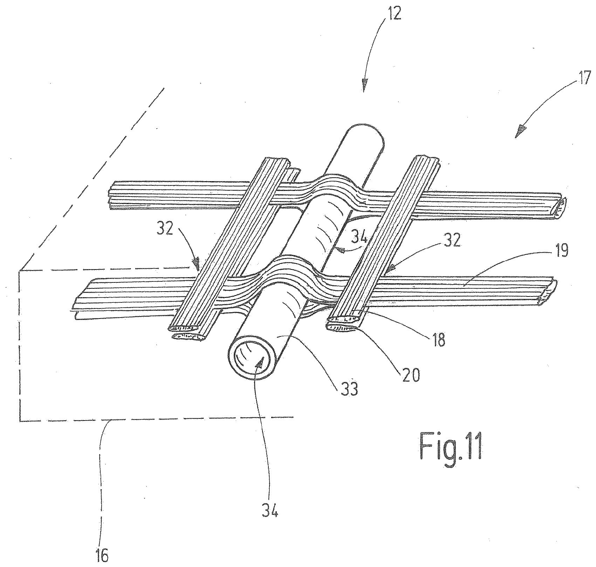

Es sind zahlreiche weitere Abwandlungen der vorgestellten Ausführungsformen möglich. Zum Beispiel veranschaulicht Figur 11 eine einlagige Bewehrung 17, die als Gelege ausgebildet ist und in einer Richtung Stränge 19 und in einer anderen Richtung Stränge 18, 20 aufweist. Die Stränge 19 laufen zwischen den Strängen 18, 20 durch und sind an den Kreuzungsstellen 32 miteinander, zum Beispiel durch Kleben, Heißsiegeln, Schweißen oder dergleichen Techniken, verbunden. Die Bewehrung 17 bildet ein gitterförmiges Gelege, das prinzipiell auch bei allen anderen Ausführungsformen der Erfindung zur Anwendung kommen und beispielsweise gewebeartige Bewehrungen 17 ersetzen kann.

Als Befestigungselement 12 ist hier ein Stabelement 33 vorgesehen. Es bildet einen länglichen gestreckten und somit näherungsweise zylindrischen oder auch anderweitig geformten länglichen Körper, vorzugsweise mit Kreisquerschnitt oder mit Polygonalquerschnitt. Beispielsweise kann das Stabelement 33 gerade, unten im Zickzack gebogene, mäanderförmige oder sonst wie gewählte Abschnitte aufweisen.

Im vorliegenden Ausführungsbeispiel ist das Stabelement 33 außen wenigstens abschnittsweise mit einem Gewinde 34 versehen. Anstelle dessen, können auch ein oder mehrere ringförmige Rillen, Nuten oder dergleichen oder auch eine ganz oder lediglich zonenweise gerändelte, eine aufgeraute oder auch eine glatte Außenumfangsfläche zur Anwendung kommen.

Das Stabelement 33 ist vorzugsweise so ausgebildet, dass es an einer Stirnseite des in Figur 11 lediglich gestrichelt angedeuteten Grundkörpers 16 abschließt. Zur Befestigung weist das Stabelement 33 dann an seinem stirnseitigen Ende eine Gewindebohrung 34 auf, d.h. es kann als Gewindehülse ausgebildet sein. Es kann jedoch auch vorgesehen sein, dass das Stabelement 33 zum Beispiel an der Schmalseite des Grundkörpers 16 herausragt und andere Befestigungsmittel trägt, wie zum Beispiel ein Außengewinde, eine Öse oder dergleichen. Außerdem kann das Stabelement 34 abgewinkelt sein und aus der Flachseite des Grundkörpers 16 ragen oder bündig mit dieser abschließen. Wiederum sind alle vorstehend genannten Befestigungselementarten möglich.

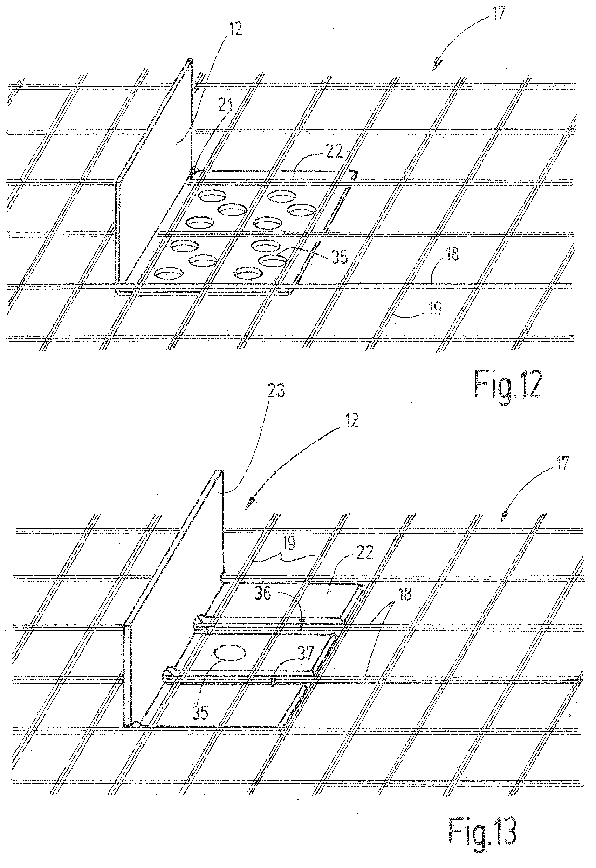

Figur 12 veranschaulicht die Bewehrung 17 und das Befestigungselement 12 für ein Betonfertigelement 10 in modifizierter Ausbildung. Das Befestigungselement 12 ist als zweischenkliges zum Beispiel abgewinkeltes Blechteil oder auch entsprechendes Kunststoffteil ausgebildet. Die im Zusammenhang mit den Figuren 1 bis 6 gegebenen Erläuterungen gelten entsprechend. Jedoch kann der Verankerungsabschnitt 22 von den vorigen Beschreibungen abweichend ausgebildet sein, indem er einen oder mehrere Durchbrüche 35 aufweist. Diese sind vorzugsweise so groß, dass sie bei der Herstellung des Grundkörpers 16 von dessen noch flüssiger oder breiiger Masse ausgefüllt werden, so dass eine mechanische Verbindung zwischen dem Grundkörper 16 und dem Befestigungselement 12 entsteht.

Durch die Durchbrüche 35 kann der Beton beim Vergießen besser fließen, ohne dass Klebefläche verloren ginge, wenn die Durchbrüche 35 des Befestigungselements 12 auf die Gitterstruktur der Bewehrung 17 abgestimmt sind. Außer dem Ausstanzen von Löchern in das Befestigungselement 12 können zusätzlich ein oder mehrere Bereiche des Verankerungsabschnitts "nach hinten umgebogen" werden. Damit werden Zugkräfte auf den Verbindungsabschnitt 22 klebegerecht in die Bewehrung 17 eingeleitet.

Während sich das Befestigungselement 12 nach Figur 1 durch einen Schlitz 21 erstreckt, der in der Bewehrung 17 ausgebildet ist, kann auf einen solchen Schlitz gemäß Figur 13 auch verzichtet werden. Das Befestigungselement 12 ist dort gemäß einer der Figuren 1 bis 6 oder 12 ausgebildet und weist an seinem Verankerungsabschnitt 22 zusätzlich Schlitze 36, 37 auf, die sich vorzugsweise parallel zueinander von dem Verbindungsabschnitt 23 weg erstrecken. Die Schlitze 36, 37 erstrecken sich etwas in den Verbindungsabschnitt 23 hinein und dienen der Aufnahme von Strängen 18 der Bewehrung 17. Während die Stränge 18 in den Schlitzen 36, 37 liegen, überqueren Stränge 19 den Verankerungsabschnitt 22. Das Befestigungselement 12 hat somit einen ein- oder mehrfach gegabelten Verankerungsabschnitt 22. Der Abstand der Schlitze 36 voneinander bzw. der Abstand der "Gabelzinken" untereinander ist auf die Abstände zwischen den Strängen 18 abgestimmt. Das Befestigungselement 12 kann so mit der Bewehrung 17 verhakt werden. Es sei darauf hingewiesen, dass der Verankerungsabschnitt 22 wie dargestellt flach, d.h. eben ausgebildet sein kann. Es ist jedoch auch möglich, ihn anderweitig auszuformen, beispielsweise mit quer zu den Schlitzen 36, 37 verlaufenden Wellen. Auch kann er mit zusätzlichen Durchbrüchen 35 versehen werden.

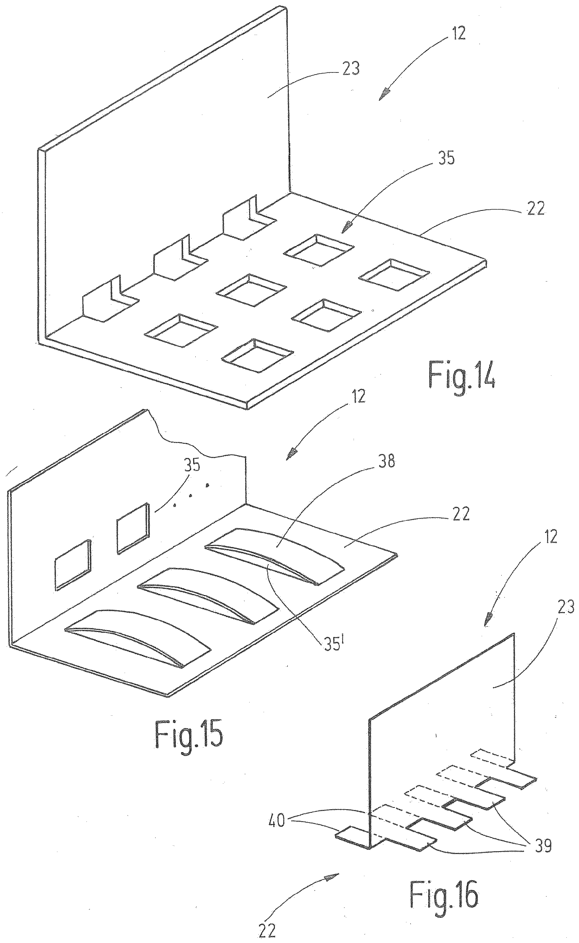

Wie Figur 14 exemplarisch zeigt, können die Durchbrüche 35 bei allen Ausführungsformen von Befestigungselementen 12, die wenigstens einen plattenförmigen Abschnitt 22 und/oder 23 aufweisen, auch als Rechtecklöcher oder anderweitig geformt ausgebildet sein.

Wie Figur 15 zeigt, müssen die Durchbrüche 35 keineswegs vollständig offen sein. Es ist auch möglich, Zungen 38 freizustanzen oder sonst wie freizustellen, die an einem oder beiden Enden noch mit dem plattenförmigem Verankerungsabschnitt 22 verbunden sind. Die Durchbrüche 35' können von den Zungen 38 ganz oder teilweise verdeckt sein und zur Aufnahme von Riegeln 30 gemäß Figur 10 oder auch lediglich dazu dienen, die formschlüssige Verankerung des Verankerungsabschnitts 22 in dem Grundkörper 16 zu verbessern.

Bei einer weiteren Ausführungsform des Verankerungselements 12, das in Figur 16 veranschaulicht ist, wird der Verankerungsabschnitt 22 durch zwei Reihen sich kammartig in unterschiedlichen Richtungen von dem unteren Rand des Verbindungsabschnitts 23 weg erstreckenden Zinken oder Zungen 39, 40 gebildet. Die Zungen 39, 40 sind vorzugsweise in einer gemeinsamen Ebene angeordnet. Sie können die Bewehrung 17 hintergreifen, indem der Verbindungsabschnitt 23 durch einen entsprechenden Schlitz in demselben hindurchgeschoben wird. Es ist jedoch auch möglich, die Zungen 39 mit einem als Gewebe oder Gelege ausgebildeten ungeschlitzten Bewehrungsmaterial zu verhaken, indem die Zungen 39, 40 in Lücken des gitterartigen Gewebes oder Geleges eingefädelt werden. Das Befestigungselement 12 nach Figur 16 eignet sich besonders gut zur Übertragung von Zugkräften auf die Bewehrung 17.

Bei besonders großformatigen Platten (zum Beispiel 4 x 6 m) können Verstärkungsrippen auf der Rückseite des jeweiligen Betonfertigelements 10 gewünscht werden. Es ist möglich, die textile Bewehrung 17 an die entsprechende Form anzupassen und ebenfalls mit Rippen zu versehen. Diese können durch in der Bewehrung 17 ausgebildete Wellen oder durch an die Bewehrung 17 angesetzte weitere Bewehrungselemente gebildet sein. Es ist vorteilhaft, die Befestigungselemente 12 bis 15 im Bereich dieser Rippen anzuordnen. Beispielsweise kann diese Rippe den Kragen 16a nach Figur 2 bilden. Es wird darauf hingewiesen, dass Figur 2 nicht maßstäblich ist, d.h. dass der Kragen 16a bzw. die Rippe auch wesentlich größer ausgebildet sein kann als in Figur 2 dargestellt.

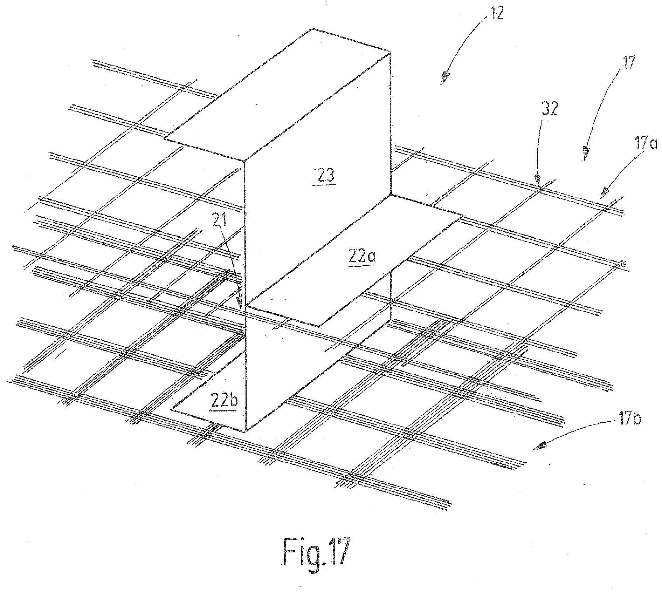

In Figur 17 ist ein weiteres Ausführungsbeispiel der Erfindung veranschaulicht, bei dem das zumindest eine Befestigungselement 12 doppelstöckig ausgebildet ist. Es weist einen ersten Befestigungsabschnitt 22a und einen zweiten Befestigungsabschnitt 22b auf, die voneinander in einem Abstand angeordnet sind. Der erste Abschnitt 22a ist mit einer ersten Bewehrungslage 17a verbunden. Der zweite Befestigungsabschnitt 22b ist mit einer zweiten, beabstandeten Bewehrungslage 17b verbunden. Es können weitere Bewehrungslagen und Befestigungsabschnitt vorgesehen sein.

In dem dargestellten Ausführungsbeispiel wird die erste Bewehrungslage 17a von dem Befestigungselement 12 durchgriffen. Dazu kann in der Bewehrungslage 17a ein Schlitz 21 ausgebildet sein. Die Verbindung zwischen dem Befestigungselement 12 und der Bewehrung 17 kann auf jede der vorstehend genannten Weisen (Kleben, Schweißen usw.) hergestellt sein. Außerdem kann das Befestigungselement auf jeder der vorstehend erläuterten Arten abgewandelt sein.

Generell gilt, dass das Befestigungselement 12 sowohl einteilig als auch mehrteilig aus Kunststoff oder Metall als Spritzgussteil oder als Biegeteil, z.B. Stanzbiegeteil ausgebildet sein kann.

Das Befestigungselement dient zur Befestigung des Fertigbauteils z.B. an einem Bauwerk. Zusätzlich kann es beim Vergießen als Abstandshalter der zweiten Bewehrungslage 17b von der Schalung und als Abstandshalter zwischen den Bewehrungslagen 17a, 17b dienen. Beim Gießen können die Bewehrungslagen 17a, 17b mittels des Befestigungselements 12 (sowie etwaiger weiterer Befestigungselemente 13 -15) in der Gießform schwebend aufgehängt werden. Dies gilt auch bei allen anderen Ausführungsformen der Erfindung.

Zur Herstellung des Betonfertigelement 10 wird zunächst die Bewehrung 17 mit Befestigungselementen 12, 13 versehen, wobei die Befestigungselemente 12, 13 auf geeignete Weise unmittelbar mit der Bewehrung 17 verbunden werden. Die so gebildete Einheit wird dann, wie es Figur 18 zeigt, in eine Gießform 31 eingelegt, die dann mit einem noch nicht ausgehärteten Beton gefüllt wird. Dieser beginnt auszuhärten. Sobald diese eine ausreichende Festigkeit erhalten hat, die noch unterhalb der Endfestigkeit liegen kann, kann das entstehende Betonfertigelement 10 ausgeformt werden. Dazu kann die Form mehrteilig ausgebildet sein. Mit einiger Vorsicht können die Befestigungselemente 12, 13 bereits zur Handhabung des Betonfertigelements 10 dienen.

Ein Betonfertigelement 10 mit einer textilen Bewehrung 17 weist Befestigungselemente 12, 13, 14, 15 auf, die unmittelbar mit der Bewehrung 17 verbunden sind. Die Befestigungselemente 12 bis 15 können abgewinkelt ausgebildet sein und eine Flachseite des Betonfertigelements 10 durchsetzen. Ebenso können sie gerade bzw. gestreckt ausgebildet sein und an Schmalseiten eines plattenförmigen Betonfertigelements 10 zutage treten. Durch die unmittelbare Verbindung zwischen dem Befestigungselement 12 bis 15 und der Bewehrung 17 kann das Betonfertigelement besonders großflächig und dünn ausgebildet werden und somit als Fassadenplatte dienen.

### Bezugszeichenliste:

- 10: Betonfertigelement
- 11: Flachseite
- 11a: Transportöse
- 12 - 15: Befestigungselemente
- 16: Grundkörper
- 17: Bewehrung, Bewehrungslagen 17a, 17b
- 18 - 20: Stränge
- 21: Schlitz
- 22: Verankerungsabschnitt / Fuß / Kopf
- 23: Verbindungsabschnitt
- 24: Verbindung
- 25: Tasche
- 26: Klebstoff
- 27: Befestigungswinkel
- 28: Nut
- 29: Abschnitt
- 30: Riegel
- 31: Form
- 32: Kreuzungsstelle
- 33: Stabelement
- 34: Gewindebohrung
- 35, 35': Durchbruch
- 36, 37: Schlitze
- 38 - 40: Zungen

## Patentansprüche

1. Fassadenbekleidungselement (10)
- mit einem Grundkörper (16) aus einem Beton,
- mit zumindest einer Lage einer textilen Bewehrung (17), die in den Grundkörper (16) eingebettet ist,
- mit zumindest einem Befestigungselement (12 - 15), das mit der textilen Bewehrung (17) unmittelbar verbunden ist,
**dadurch gekennzeichnet, dass**
zur unmittelbaren Verbindung eine stoffschlüssige Verbindung vorgesehen ist, die durch einen Klebstoff oder dadurch gebildet ist, dass die Bewehrung (17) eine Kunststoffbeschichtung aufweist und die stoffschlüssige Verbindung zwischen dem Befestigungselement (12 - 15) und der Bewehrung (17) durch die Kunststoffbeschichtung gebildet ist.

2. Fassadenbekleidungselement nach Anspruch 1, **dadurch gekennzeichnet, dass** die Bewehrung (17) Naturfasern, Kunstfasern, Mineralfasern, Glasfasern, Kohlenstofffasern und/oder Metallfasern enthält.

3. Fassadenbekleidungselement nach einem der vorstehenden Ansprüche, **dadurch gekennzeichnet, dass** die stoffschlüssige Verbindung zwischen dem Befestigungselement (12 - 15) und der Bewehrung (17) eine flächenhafte Verbindung ist.

4. Fassadenbekleidungselement nach einem der vorstehenden Ansprüche, **dadurch gekennzeichnet, dass** das Befestigungselement (12 - 15) einen flächenhaften, mit der Bewehrung (17) verbundenen Verankerungsabschnitt (22) und einen sich von diesem weg aus dem Grundkörper (16) heraus erstreckenden Verbindungsabschnitt (23) aufweist.

5. Fassadenbekleidungselement nach Anspruch 4, **dadurch gekennzeichnet, dass** der Verankerungsabschnitt (22) als ebene Platte ausgebildet ist.

6. Fassadenbekleidungselement nach Anspruch 4, **dadurch gekennzeichnet, dass** der Verankerungsabschnitt (23) die Bewehrung (17) flächig hintergreifend angeordnet ist.

7. Fassadenbekleidungselement nach Anspruch 4, **dadurch gekennzeichnet, dass** der Verankerungsabschnitt (22) in eine Tasche (25) der Bewehrung (17) eingefügt ist.

8. Fassadenbekleidungselement nach einem der vorstehenden Ansprüche, **dadurch gekennzeichnet, dass** die Bewehrung (17) zwei Bewehrungslagen aufweist.

9. Fassadenbekleidungselement nach einem der vorstehenden Ansprüche, **dadurch gekennzeichnet, dass** das die Bewehrung (17) Maschen aufweist und dass das Befestigungselement (12 - 15) als Verankerungsabschnitt (22) einen Kopf aufweist, der in der Masche angeordnet ist.

10. Fassadenbekleidungselement nach Anspruch 9, **dadurch gekennzeichnet, dass** der Kopf eine an seinem Außenumfang umlaufende Nut (28) zur Aufnahme von Teilen der Bewehrung (17) aufweist.

11. Verfahren zur Erzeugung eines Fassadenbekleidungselements nach einem der vorstehenden Ansprüche, **gekennzeichnet durch** folgende Schritte:
Bereitstellen einer Schalform (31),
Bereitstellen einer textilen Bewehrung (17) und Fixieren der Befestigungselemente (12 - 15) an dieser Anordnen der aus der Bewehrung (17) und den Befestigungselementen gebildeten Einheit in der Schalform (31),
Einfüllen von ungehärtetem Beton in die Schalform (31), Härten des Betons und Entnahme des Betonfertigelements.

## Claims

1. Facade cladding element (10)
- with a base body (16) made of a concrete,
- with at least one layer of a textile reinforcement (17) which is embedded in the base body (16),
- with at least one fixing element (12 - 15) which is directly connected to the textile reinforcement (17),
**characterised in that**
for the direct connection, a substance-bonded connection is provided which is formed by an adhesive, or formed **in that** the reinforcement (17) has a plastic coating and the substance-bonded connection between the fixing element (12 - 15) and the reinforcement (17) is formed by the plastic coating.

2. Facade cladding element according to claim 1, **characterised in that** the reinforcement (17) contains natural fibres, synthetic fibres, mineral fibres, glass fibres, carbon fibres and/or metal fibres.

3. Facade cladding element according to any of the preceding claims, **characterised in that** the substance-bonded connection between the fixing element (12 - 15) and the reinforcement (17) is a connection by surface attachment.

4. Facade cladding element according to any of the preceding claims, **characterised in that** the fixing element (12 - 15) has a surface-attached anchoring portion (22) connected to the reinforcement (17), and a connecting portion (23) extending away from this out of the base body (16).

5. Facade cladding element according to claim 4, **characterised in that** the anchoring portion (22) is formed as a flat plate.

6. Facade cladding element according to claim 4, **characterised in that** the anchoring portion (23) is arranged undercutting the surface of the reinforcement (17).

7. Facade cladding element according to claim 4, **characterised in that** the anchoring portion (22) is inserted in a pocket (25) of the reinforcement (17).

8. Facade cladding element according to any of the preceding claims, **characterised in that** the reinforcement (17) comprises two reinforcement layers.

9. Facade cladding element according to any of the preceding claims, **characterised in that** the reinforcement (17) comprises mesh, and that as an anchoring portion (22), the fixing element (12 - 15) has a head arranged in the mesh.

10. Facade cladding element according to claim 9, **characterised in that** the head comprises a groove (28) running around its outer periphery for receiving parts of the reinforcement (17).

11. Method for producing a facade cladding element according to any of the preceding claims, **characterised by** the following steps:
- provision of a shuttering mould (31),
- provision of a textile reinforcement (17) and fixing of the fixing elements (12 - 15) to this,
- arrangement of the unit formed from the reinforcement (17) and the fixing elements in the shuttering mould (31),
- introduction of unhardened concrete into the shuttering mould (31), hardening of the concrete, and removal of the reinforced concrete element.

## Revendications

1. Elément de revêtement de façade (10),
- comprenant un corps de base (16) réalisé en béton,
- comprenant au moins une couche d'une armature textile (17) qui est noyée dans le corps de base (16),
- comprenant au moins un élément de fixation (12 à 15) qui est relié directement à l'armature textile (17),
**caractérisé en ce que**
pour la liaison directe, il est prévu une liaison par matière qui est réalisée avec un adhésif ou par le fait que l'armature (17) présente une couche de matière plastique et la liaison par matière entre l'élément de fixation (12 à 15) et l'armature (17) est établie par la couche de matière plastique.

2. Elément de revêtement de façade selon la revendication 1, **caractérisé en ce que** l'armature (17) contient des fibres naturelles, des fibres synthétiques, des fibres minérales, des fibres de verre, des fibres de carbone et/ou des fibres métalliques.

3. Elément de revêtement de façade selon une des revendications précédentes, **caractérisé en ce que** la liaison par matière entre l'élément de fixation (12 à 15) et l'armature (17) est une liaison par surface.

4. Elément de revêtement de façade selon une des revendications précédentes, **caractérisé en ce que** l'élément de fixation (12 à 15) présente une partie d'ancrage (22) s'étendant sur une certaine surface, reliée à l'armature (17), et une partie d'assemblage (23) s'étendant à partir de celle-ci, hors du corps de base (16).

5. Elément de revêtement de façade selon la revendication 4, **caractérisé en ce que** la partie d'ancrage (22) est réalisée sous forme de plaque plane.

6. Elément de revêtement de façade selon la revendication 4, **caractérisé en ce que** la partie d'ancrage (23) est disposée de manière à s'engager à plat derrière l'armature (17).

7. Elément de revêtement de façade selon la revendication 4, **caractérisé en ce que** la partie d'ancrage (22) est insérée dans une cavité (25) de l'armature (17).

8. Elément de revêtement de façade selon une des revendications précédentes, **caractérisé en ce que** l'armature (17) présente deux couches d'armature.

9. Elément de revêtement de façade selon une des revendications précédentes, **caractérisé en ce que** l'armature (17) présente des mailles et **en ce que** l'élément de fixation (12 à 15) présente, en tant que partie d'ancrage (22), une tête qui est disposée dans la maille.

10. Elément de revêtement de façade selon la revendication 9, **caractérisé en ce que** la tête présente une rainure (28) qui s'étend sur son pourtour extérieur et est destinée à recevoir des parties de l'armature (17).

11. Procédé de réalisation d'un élément de revêtement de façade selon une des revendications précédentes, **caractérisé en ce qu'**il comprend les étapes suivantes :
mise en place d'un moule de coffrage (31),
mise en place d'une armature textile (17) et fixation des éléments de fixation (12 à 15) sur celle-ci,
disposition, dans le moule de coffrage (31), de l'unité formée de l'armature (17) et des éléments de fixation,
introduction de béton non durci dans le moule de coffrage (31), durcissement du béton et retrait de l'élément préfabriqué en béton.
